# EUROPEAN PATENT APPLICATION

(11) **EP 4 339 168 A1**
(43) Date of publication of application: **20.03.2024**
(21) Application number: 23194898.5
(22) Date of filing: 01.09.2023
(51) Int. Cl.: C03B 5/237, C03C 1/02, B01D 53/62, B01D 53/81, C01D 7/07, C01D 7/38, C01F 5/24, C01F 11/18, C03B 5/027, C03B 5/235

(54) **PROCESS FOR THE CAPTURE OF CO2 INTEGRATED INTO THE MELTING OF GLASS**

(30) Priority: 19.09.2022 FR 2209437
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: TSIAVA, Rémi, 78350 Jouy-En-Josas (FR)
(74) Representative: Air Liquide

(57) **Abstract**

Glass melting process, comprising: the introduction of a vitrifiable solid charge (11) into a furnace (1), the heating and the melting of the charge (11) in the furnace (1), so as to obtain molten glass (17), the discharge of the molten glass (17) from the furnace (1) and the discharge of a CO₂-containing gaseous effluent (20) from the furnace (1), the charge (11) comprising at least one carbonate undergoing a dissociation reaction and releasing gaseous CO₂ (18) when the charge (11) is heated and melted, the gaseous effluent (20) discharged from the furnace (1) being used to produce, by carbonation with the CO₂ present in the gaseous effluent (20), at least one additive (33) in the form of an alkali metal or alkaline earth metal carbonate, at least a part of which is incorporated in the charge (11) which is introduced into the furnace (1), the heat for heating the charge (11) in stage b. being provided by:
• by electric heating,
• by combustion of a non-carbon-based fuel (12) with an oxidant (13), optionally in combination with electric heating, or
• both by combustion of a non-carbon-based fuel (12) with an oxidant (13) and by combustion of a carbon-based fuel with an oxidant, optionally in combination with electric heating.

## Description

The present invention relates to the manufacture of glass.

Greenhouse gas emissions contribute significantly to global warming. One of said greenhouse gases is CO₂.

It is consequently important to reduce as much as possible emissions of CO₂ into the atmosphere from industrial sites.

Glass furnaces are included among CO₂-emitting industrial plants.

For the manufacture of glass, a vitrifiable solid charge having a composition which is controlled and appropriate to the nature of the glass to be produced is introduced into a furnace and is melted therein. The molten glass thus obtained is discharged from the furnace and shaped according to the desired end product/its final application, for example flat glass, hollow glass, optical glass, and the like. A gaseous effluent is also discharged from the furnace.

The melting of glass is energy-intensive.

In most cases, at least a part of the energy required is provided by burning carbon-based fuels, such as natural gas, fuel oil and coal. The combustion of a carbon-based fuel generates a combustion gas containing CO₂ (resulting from carbon atoms present in the fuel) and water vapour (resulting from hydrogen atoms in the fuel). Said combustion gas forms part of the gaseous effluent discharged from the furnace.

For the future of our planet, it is important to reduce harmful emissions, such as industrial emissions, of greenhouse gases, such as CO₂.

Various processes have been developed which make it possible, by means of physical processes (for example: cryogenic separation) and/or chemical processes (for example: chemical looping), to capture CO₂ present in gaseous effluents and in particular in industrial gaseous effluents.

However, most of the currently available industrial CO₂-capture processes are only cost-effective for the treatment of high flows of gaseous effluents, such as those generated by large-size industrial sites.

The amounts of gaseous effluent generated by glass melting furnaces, including large-size continuous furnaces, such as float furnaces (furnaces for the manufacture of float glass), are not large enough to enable such a cost-effective CO₂ capture with current technologies.

Since any emission of CO₂ contributes to the greenhouse gas effect, it would be desirable to be able to reduce CO₂ emissions from glass melting plants for which CO₂ capture by known CCUS processes is not cost-effective.

A CO₂ capture process appropriate for a glass-melting furnace is described in JP-A-2012001392. As indicated in JP-A-2012001392, it is known, for the manufacture of glass, to heat and melt the raw materials by the combustion of natural gas, heavy oil and reformed natural gas hydrocarbons, biomass-derived fuels, petroleum-based fuels, such as petrol and light oil, oil sands, and the like. This combustion generates a combustion gas containing carbon dioxide.

In order to reduce carbon-dioxide emissions without lowering the quality and the efficiency of glass production in such a process, it was proposed in JP-A-2012001392 to bring the CO₂-containing combustion gas, after its discharge from the glass furnace, into contact with an aqueous solution of an alkaline hydroxide so as to obtain an alkaline carbonate, said alkaline salt subsequently being used as starting material in the glass melting furnace.

JP-A-2011037706, discloses a process whereby molten glass is produced in a glass-melting furnace comprising a melting zone and a refining zone. The melting zone is heated by a roof-mounted oxy-fuel burner which directs its flame downwards. A mixture of pulverulent starting material is introduced into the melting zone through said oxy-fuel burner. An auxiliary roof-mounted oxy-fuel burner, which also directs its flame downwards, is mounted in the refining zone in order to heat the latter. According to one embodiment of said glass-melting process, the flue gases discharged from the furnace are dedusted in a dust collector. Similarly to what is disclosed in JP-A-2012001392, all or part of the dedusted flue gases are introduced into a column packed with lime (calcium oxide), resulting in the obtention of calcium carbonate. The calcium carbonate thus obtained forms part of the pulverulent starting material mixture introduced into the melting zone through the oxy-fuel burner.

Full electric glass melting furnaces are also known. In these furnaces, the heat supply to the furnace is not provided by combusting fossil energy, but exclusively by means of electric energy via electrodes.

Apart from combustion gases, in the case of a glass-melting furnace heated at least in part by the combustion of a fuel, the gaseous effluent from the furnace comprises chemical compounds released by the charge in the furnace. Said released chemical compounds also include CO₂.

This is due to the fact that the vitrifiable solid charge is also a source of CO₂ emissions. In addition to silicon oxide (SiO₂), the charge typically also contains functional additives, such as fluxes, also referred to as fluxing agents, stabilizers, colouring agents, and the like.

Some of these additives, in particular alkali-metal and/or alkaline-earth-metal carbonates, dissociate inside the furnace and thereby release CO₂ into the atmosphere above the charge in the furnace.

It is an aim of the present invention further to reduce the CO₂ emissions from glass-melting processes without resorting to expensive processes and plants.

The present invention proposes a glass-melting process comprising a stage (referred to as stage a.) of introduction of a vitrifiable solid charge into a furnace, a stage (referred to as stage b.) of heating and of melting of the charge in the furnace, so as to obtain molten glass, a stage (known as stage c.) of discharge of the molten glass from the furnace and a stage (known as stage d.) of discharge of a gaseous effluent from the furnace.

The charge introduced into the furnace in stage a. comprises at least one alkali-metal or alkaline-earth-metal carbonate.

In stage b., said at least one carbonate undergoes a dissociation reaction. Gaseous CO₂ is then released.

The gaseous effluent discharged from the furnace during stage d. contains CO₂. The CO₂ in the gaseous effluent includes gaseous CO₂ released as a result of the above-described dissociation of the carbonate(s) in the charge but can also comprise gaseous CO₂ of other origins, for example CO₂ generated when a carbon-based fuel is burned to heat the furnace.

The process also comprises a stage e., in which the gaseous effluent discharged from the furnace during stage d. is used to produce, by carbonation with the CO₂ present in said gaseous effluent, at least one additive in the form of an alkali-metal or alkaline-earth-metal carbonate. At least a part of the additive thus produced is incorporated in the charge which is introduced into the furnace in stage a.

In this way, at least a part of the CO₂ present in the gaseous effluent discharged from the furnace is captured by the carbonation reaction and recycled to the furnace instead of being emitted into the atmosphere.

In the glass-melting process of the present invention, the heating of the charge in stage b. is performed:
- by electric heating, or
- by combustion of a non-carbon-based fuel (12) with an oxidant (13), or
- by combustion of a non-carbon-based fuel (12) with an oxidant (13) in combination with electric heating, or
- both by combustion of a non-carbon-based fuel (12) with an oxidant (13) and by combustion of a carbon-based fuel with an oxidant, or
- by combustion both of a non-carbon-based fuel (12) with an oxidant (13) and of a carbon-based fuel with an oxidant in combination with electric heating.

In the present context, a 'functional additive' is understood to mean an ingredient of the solid charge, other than sand (SiO₂) and cullet. These functional additives are added to the charge in order to improve the melting and/or the refining and/or the shaping of the glass (for example in the case of glass fibres), or also in order to modify the properties of the solid glass product obtained (for example: refractive index, thermal shock resistance, Young's modulus, and the like). Thus, the following can be added to the charge:
- sodium carbonate, if appropriate accompanied by potassium carbonate, as flux,
- calcium carbonate, if appropriate accompanied by magnesium carbonate, as stabilizer,
- aluminium oxide to increase the hydrolytic resistance,
- lead oxide, to increase the density, refractive index and brilliance of the glass,
- boron oxide as network former providing greater thermal stability,
- metal oxides of the transition elements and/or certain lanthanides as colouring agent or decolourizing agent, and
- oxidation-reduction additives, such as carbon and sodium sulphate.

In the context of the present application, the terms "oxidant" and "oxidizer" are synonymous and used interchangeably.

In the present context, "carbon-based fuels" are fuels containing carbon atoms. During combustion of the carbon-based fuel, said carbon atoms give rise to the formation of carbon oxides.

Carbon-based fuels which can be used in the context of the present invention include natural gas and biogas.

In the present context, "non-carbon-based fuels" are fuels that do not contain carbon atoms. Non-carbon-based fuels do not generate carbon oxides during the combustion of the fuel. Non-carbon-based fuels which can be used in the context of the present invention include hydrogen and ammonia. In order to limit the overall carbon footprint, the use of blue hydrogen or also green hydrogen is preferred. A distinction is made between grey hydrogen, green hydrogen and blue hydrogen. Grey hydrogen production exhibits a CO₂ emission intensity during hydrogen production of up to 9.3 kg CO₂/kg H₂. Grey hydrogen can, for example, be produced by steam methane reforming without CCUS (Carbon Capture and Utilisation or Sequestration). Blue hydrogen production exhibits a CO₂ emission intensity of up to 0.97 kg CO₂/kg H₂. Blue hydrogen can, for example, be produced by steam methane reforming with CCUS. The production of green hydrogen does not generate CO₂ emissions. Green hydrogen can, for example, be produced by electrolysis of water using renewable energy (see van Cappellen, L., Croezen, H. and Rooijers, F., "Feasibility Study into Blue Hydrogen", CE Delft, 2018).

The oxidant can be air, oxygen-enriched air or industrial oxygen. In the present context, the term "industrial oxygen" is understood to mean a gas having an oxygen content of 90 to 100 vol%, preferably of 95 to 100 vol%. The oxidant can be supplied to the furnace as such or after having been mixed with another gas. This is in particular the case when "artificial air" consisting of a mixture of industrial oxygen and an essentially inert gas, such as recycled gaseous effluent, is supplied to the furnace. The use of such a mixture can in particular make possible a better coverage of the charge by the flame/flames in the furnace. Different oxidants may be combined in the process according to the invention. For example, different burners may operate with different oxidants or a different oxidant may be lanced separately into furnace, as is the case for the practice often referred to as "oxygen boosting".

All or part of the heat for heating the charge in stage b. may be provided by electric heating, for example by means of electrodes immersed in the molten charge.

Such electric heating may be the only source of heat of the furnace or may be combined with other sources of heat, such as in particular the combustion of a fuel, more particularly a non-carbon-based fuel, with an oxidant.

According to some embodiments of the present invention, the heat for heating the charge in stage b. is generated by burning a non-carbon-based fuel, optionally in combination with electric heating.

In that case, the generation of CO₂ by fuel combustion is avoided. Substantially all of the CO₂ in the gaseous effluent from the furnace is CO₂ which has been released by the charge in the furnace, although in the case of air ingress into the furnace, a, generally negligible amount of CO₂ may also enter the furnace as part of the ingress air.

As, typically, some of the CO₂ from the functional additives remain in the molten glass and is not released into the furnace atmosphere and as, moreover, not all of the CO₂ in the gaseous effluent is typically captured by the carbonation reaction of stage c., in such an embodiment, the amount of carbon captured from the gaseous effluent to produce the additive in stage e. may fall short of the amount of carbon in the carbonate which is added to the charge in stage a.

The same is true when, in stage b., the furnace is heated by electric heating only.

According to an alternative embodiment of the present invention, the heat for heating the charge in stage b. is generated by burning a combination of a carbon-based fuel and a non-carbon-based fuel, again optionally with additional electric heating. In this case, the gaseous effluent from the furnace contains both CO₂ released by the charge during stage b. and CO₂ generated by the combustion of the carbon-based fuel fraction during said stage b. In that case, more CO₂ is present in the gaseous effluent and available for the production of additives by means of carbonation in stage e. of the process, but less CO₂ is generated in the furnace than when the heat generated in the furnace by means of fuel combustion is generated by combustion of carbon-based fuel only, all other factors being equal. Thus, by combusting a combination of a non-carbon based fuel and a carbon-based fuel during stage b., it is possible to optimize the amount of CO₂ present in the gaseous effluent.

The heating means/heat source(s) used to heat the charge in the furnace thus have a significant impact on the composition of the gaseous effluent discharged from the furnace in stage d..

When, in stage b., a carbon-based fuel is also burned to heat the charge, the discharged gaseous effluent comprises CO₂ generated by the combustion of the carbon-based fraction of the fuel, in addition to the CO₂ released by the charge.

When the fuel is burned with air as oxidizer, the discharged gaseous effluent comprises significant amounts of nitrogen, which by its nature does not contribute to the combustion of the fuel, nitrogen being the predominant ingredient of the air used as oxidizer.

When the fuel is burned with oxygen as oxidizer, the discharged gaseous effluent comprises a much smaller amount of nitrogen (N₂) (for example resulting from the charge and/or from ingress of ambient air into the furnace), indeed even no nitrogen.

When the fuel is burned with oxygen-enriched air or when the furnace uses both air and oxygen as oxidizer (for example, in different burners or when the furnace comprises "aero" burners in combination with oxygen lances (also known as "oxy-boosting")), the nitrogen content in the discharged gaseous effluent lies between these two extremes.

When the only fuel burned in stage b. is a non-carbon-based fuel, this combustion does not generate CO₂. This is in particular the case when the fuel is hydrogen or ammonia.

The combustion of hydrogen (2H₂ + O₂ → 2H₂O) generates water vapour which is found in the gaseous effluent discharged in stage d. The combustion of ammonia (4NH₃ + 3O₂ → 6H₂O + 2N₂) generates water vapour and also nitrogen which are found in the discharged gaseous effluent.

Electric heating does not generate combustion gas in the furnace.

Thus, when electric heating and/or the combustion of a non-carbon-based fuel are used as the sole source(s) of heat in the furnace, the CO₂ present in the gaseous effluent discharged from the furnace is essentially limited to the CO₂ released by the charge into the atmosphere of the furnace.

When the combustion of a non-carbon-based fuel is combined with the combustion of a carbon-based fuel, all other factors <nature of the oxidant, amount of heat provided by combustion, composition and feed rate of the charge, etc.> being equal, the amount of CO₂ in the gaseous effluent is higher than if only the non-hydrocarbon fuel is combusted during stage b. and lower than if only the carbon-based fuel were to be combusted in the furnace.

When the combustion of a non-carbon-based fuel is combined with the combustion of a carbon-based fuel, a mixture of non-carbon-based fuel and carbon-based fuel may be burned. Alternatively, the non-carbon-based fuel and the carbon-based fuel may be injected separately through a same burner or via different injection devices. The non-carbon-based fuel and the carbon-based fuel may be burned with the same oxidant or with oxidants of different compositions, etc.

According to an advantageous embodiment, when both a non-carbon-based fuel and a carbon-based fuel are burned to heat the furnace in step b., the ratio between the non-carbon-based fuel and the carbon-based fuel burned in the furnace is controlled so that at most 269 kg CO₂ is generated by the combustion of the carbon-based fuel per tonne of molten glass discharged from the furnace in step c., preferably at most 252 kg CO₂/tonne of molten glass, more preferably at most 166 kg CO₂/tonne of molten glass, for example at most 85 kg CO₂/tonne of molten glass.

For any given carbon-based fuel, the lower the amount of carbon-based fuel combusted in the furnace, the lower the amount of CO₂ which is generated during the process by said combustion.

However, combining the combustion of a non-carbon based fuel with the combustion of a carbon-based fuel in the process according to the present invention also has certain advantages. For example, it makes it easier to implement the process of the invention with equipment, including burners and furnaces, originally developed for processes based on the combustion of fossil fuel only, optionally in combination with electric heating and it makes it easier to reproduce the known heating profiles in the furnace. It may therefore be useful for at least 10%, for example at least 25% or at least 50% of the heat generated by combustion during step b. of the process to be generated by the combustion of a carbon-based-fuel.

The reactor in which the carbonation of stage e. takes place is referred to as a "carbonator". The carbonation is advantageously carried out by direct contact between the gaseous effluent discharged from the furnace with the oxide and/or the hydroxide of the alkali metal or alkaline-earth metal of the carbonate to be produced inside the carbonator.

Thus, the carbonation can be carried out by direct contact between the gaseous effluent and the oxide of the alkali metal or alkaline-earth metal of the carbonate, by direct contact between the gaseous effluent and the hydroxide of the alkali metal or alkaline-earth metal of the carbonate or also by direct contact between the effluent and a mixture of the oxide and of the hydroxide of the alkali metal or alkaline-earth metal of the carbonate.

For example, calcium carbonate can be produced, as additive, by bringing the CO₂-containing gaseous effluent into contact with CaO and/or Ca(OH)₂.

When, during stage e., it is envisaged to produce carbonates of several alkali metals and/or alkaline-earth metals, these carbonates can be produced in separate carbonators or CO₂-containing gaseous effluent can be brought into contact with the oxide and/or the hydroxide of several alkali metals and/or alkaline-earth metals in one and the same carbonator.

The carbonator can be a batch carbonator, a fluidized bed carbonator or an entrained bed carbonator.

In order to accelerate the carbonation, it is necessary to maximize the contact surface between, on the one hand, the gaseous effluent and the CO₂ it contains and, on the other hand, the oxide/hydroxide of the alkali metal or alkaline-earth metal. This is because two phases are distinguished in the carbonation reaction: a first phase having a very fast reaction, at the contact surface between the gaseous CO₂ and the solid oxide/hydroxide, and a second phase having a slower reaction, the speed of which is controlled by the diffusion of the CO₂ into the solid phase.

It is thus appropriate to use an oxide/hydroxide having a small particle size, for example a particle size of less than 1 mm, preferably between 100 and 200 µm. It is also possible to improve the contact between the gaseous effluent and the oxide by using a porous oxide, for example an oxide with a porosity of at least 0.078 cm³/Å/g. An oxide having a specific surface (BET) of greater than 17 is advantageously used.

The carbonation/decarbonation is an equilibrium chemical reaction (reversible reaction). It is consequently advisable to choose, for the carbonator, reaction conditions which promote the carbonation over the decarbonation. An important parameter in this context is the temperature in the carbonator. The temperature in the carbonator is kept below temperatures which promote decarbonation. The carbonation in the carbonator generally takes place at a temperature below 1050°C, preferably below 950°C. It has proved advantageous to carry out the carbonation in the carbonator at a temperature between 500°C and 950°C, preferably between 550°C and 800°C, more preferably between 550°C and 700°C. This temperature can also be selected as a function of the alkali metal or alkaline-earth metal of the carbonate to be produced and also as a function of the use of the oxide or the hydroxide of said metal as starting material for the carbonation.

The temperature in the carbonator is, to a large extent, determined by the temperature at which the gaseous effluent is introduced into the carbonator. The temperature at which the gaseous effluent is introduced into the carbonator is advantageously between 600°C and 1000°C, preferably between 650°C and 950°C, more preferably between 700°C and 900°C.

The temperature of the gaseous effluent at the outlet of the furnace is generally such that it promotes the decarbonation rather than the carbonation.

According to one embodiment of the invention, the gaseous effluent is cooled down to a predetermined temperature or range of temperatures before it is introduced into the carbonator, this predetermined temperature or said predetermined range of temperatures being, as indicated above, advantageously between 600°C and 1000°C, preferably between 650°C and 950°C, more preferably between 700°C and 900°C.

Before being introduced into the carbonator, the gaseous effluent can in particular be cooled in one or more heat exchangers.

In the present context, the term "heat exchanger" is understood to mean an apparatus in which thermal energy is transferred from a first fluid, referred to as heat-bearing fluid or fluid to be cooled, to a second fluid, i.e. the fluid to be heated, the two fluids being separated from each other by one or more walls so that these fluids do not mix, the thermal energy being transferred from the first fluid to the second fluid through said wall or walls.

According to one embodiment of the invention, thermal energy extracted from the gaseous effluent during its cooling is recovered and used as an energy source. It is thus possible to use this thermal energy extracted from the gaseous effluent to heat an oxidant and/or a fuel.

An oxidant and/or a fuel can thus be heated in the heat exchanger(s) used to cool the gaseous effluent, the gaseous effluent then being the first fluid, i.e. the heat-bearing fluid, and the oxidant, respectively the fuel, being the second fluid, i.e. the fluid to be heated.

The heat exchange between the gaseous effluent and the oxidant/fuel can be a direct heat exchange. In this case, the gaseous effluent and the oxidant, respectively the fuel, are found on either side of and in direct contact with a wall through which the thermal energy is transferred.

The heat exchange between the gaseous effluent and the oxidant/fuel can also be an indirect heat exchange, involving an intermediate fluid. In this case, thermal energy is first transferred by direct heat exchange between the gaseous effluent and the intermediate fluid and the thermal energy thus transferred to and absorbed by the intermediate fluid is subsequently transferred by direct heat exchange from the intermediate fluid to the oxidant, respectively the fuel.

As indicated above, it is known to heat the charge in a glass-melting furnace at least partially by the heat generated by the combustion of a fuel with an oxidant.

When thermal energy extracted from the gaseous effluent is used as an energy source to heat an oxidant and/or a fuel, heated oxidant and/or heated fuel thus obtained is/are advantageously used to heat the charge in the furnace by combustion using the heated oxidant and/or the heated fuel as combustion reactant(s). By, in this way, recycling thermal energy discharged from the furnace with the gaseous effluent, the energy efficiency of the process according to the invention is improved.

The process according to the invention applies to various glass-melting furnaces. Thus, the furnace can be a batch furnace, a semi-batch furnace or a continuous furnace.

The additive produced in stage e. of the present process and introduced into the furnace with the charge in stage a. is generally a functional additive. In the furnace, the alkali-metal or alkaline-earth-metal carbonates combine and react with the sand (SiO₂), typically from 800°C.

The carbonate produced in stage e. can thus be sodium carbonate, calcium carbonate, potassium carbonate, magnesium carbonate, lithium carbonate, barium carbonate or a mixture or combination of at least two of said carbonates.

For example, when sodium carbonate and calcium carbonate are added to the charge, the following reactions are observed:
- from 800°C:

   Na₂CO₃ + CaCO₃ → Na₂Ca(CO₃)₂

   Na₂Ca(CO₃)₂ + 2SiO₂ → Na₂SiO₃ + CaSiO₃ + 2CO₂
- from 1000°C:

   Na₂CO₃ + SiO₂ → Na₂SiO₃ + CO₂

   CaCO₃ + SiO₂ → CaSiO₃ + CO₂

The silicates thus formed participate in the formation of glass in the molten phase.

The CO₂, generated in a significant amount, partially dissolves in the molten glass. Another part of the CO₂ generated forms bubbles which escape from the molten glass in an upward movement and thus contribute to the refining of the molten glass.

In glass production, sodium carbonate is used as a flux: it lowers the melting point of the charge. Sodium carbonate can be produced in stage e. by carbonation of Na₂O and/or of NaOH:

Na₂O + CO₂ ⇄ Na₂CO₃

2NaOH + CO₂ ⇄ Na₂CO₃ + H₂O

Potassium carbonate is also a flux. Potassium carbonate can be produced in stage e. by carbonation of K₂O and/or of KOH:

K₂O + CO₂ ⇄ K₂CO₃

2KOH + CO₂ ⇄ K₂CO₃ + H₂O

Calcium carbonate is the main stabilizer of glass. It provides chemical protection to glass and protects it in particular from the effects of water. Calcium carbonate can be produced in stage e. by carbonation of CaO and/or of Ca(OH)₂:

CaO + CO₂ ⇄ CaCO₃

Ca(OH)₂ + CO₂ ⇄ CaCO₃ + 2H₂O

Magnesium carbonate makes it possible to increase the viscosity of the glass in the molten state and promotes the electrical resistivity, the thermal stability and the acid resistance of the glass. Magnesium carbonate can be produced in stage e. by carbonation of MgO and/or of Mg(OH)₂:

MgO + CO₂ ⇄ MgCO₃

Mg(OH)₂ + CO₂ ⇄ MgCO₃ + 2H₂O

Lithium carbonate is another flux which makes it possible to lower the melting point. It can also reduce the thermal expansion coefficient of glass. Lithium carbonate can be produced in stage e. by carbonation of Li₂O and/or of LiOH:

Li₂O + CO₂ ⇄ Li₂CO₃

2LiOH + CO₂ ⇄ Li₂CO₃ + H₂O

Barium carbonate is another flux used in the manufacture of glass. It also acts as a mattness agent to reduce the brilliance of the finished product. Barium carbonate can be produced in stage e. by carbonation of BaO and/or of Ba(OH)₂:

BaO + CO₂ ⇄ BaCO₃

Ba(OH)₂ + CO₂ ⇄ BaCO₃ + 2H₂O

During stage e. of the process according to the invention, the CO₂ present in the gaseous effluent discharged from the furnace can in particular be used to produce one or more of the following functional additives: sodium carbonate, calcium carbonate and potassium carbonate.

According to one embodiment of the invention, the process is used for the manufacture of soda-lime glass or of borosilicate glass.

In the case of soda-lime glass, stage e. of the process is advantageously used to produce at least one carbonate chosen from sodium carbonate, calcium carbonate and barium carbonate, preferably chosen from sodium carbonate and calcium carbonate, at least a part of the carbonate(s) thus produced being added to the solid charge as a functional additive.

In the case of borosilicate glass, stage e. of the process is advantageously used to produce at least one carbonate chosen from sodium carbonate, potassium carbonate, calcium carbonate and magnesium carbonate, preferably chosen from sodium carbonate and potassium carbonate, at least a part of the carbonate(s) thus produced being added to the solid charge as a functional additive.

The molten glass discharged from the furnace in stage c. of the process can be used for the manufacture of flat glass, such as glazings, hollow glass, such as glasses, bottles and flasks, or fibre glass, such as heat-insulating glass fibres, reinforcing glass fibres and optical glass fibres, each product having a glass composition appropriate to its use. The carbonate produced in stage e. of the process and added to the solid charge is advantageously chosen in function of said composition.

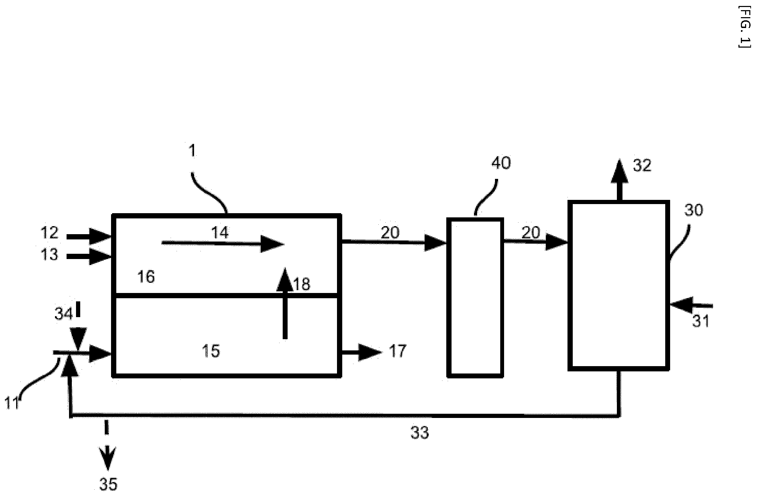

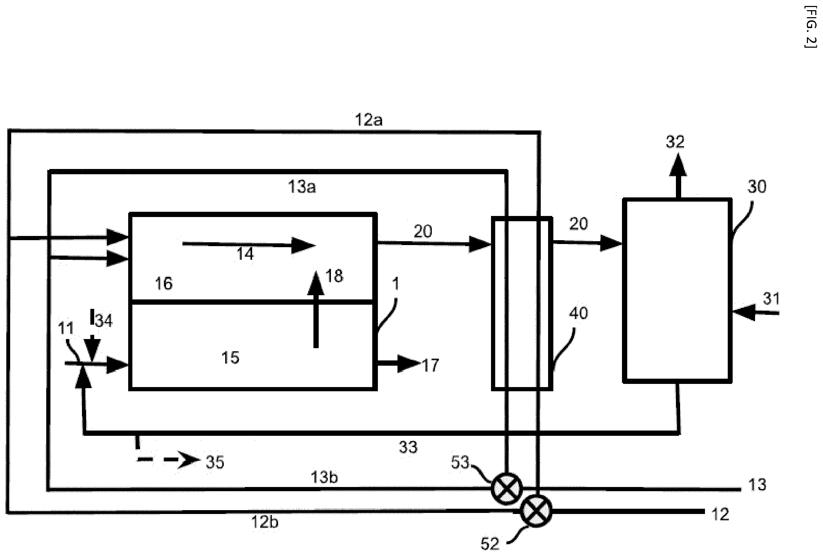

The present invention and its advantages are illustrated by the examples below, reference being made to Figures 1 and 2, which are diagrammatic representations of two embodiments of the process according to the invention.

In order to observe the environmental standards against global warming, industrial sites must reduce as much as possible their emissions of greenhouse gases into the atmosphere, such as CO₂.

Glass furnaces are included among CO₂-emitting industries.

As already mentioned above, the melting of glass in most cases involves the combustion of fossil carbon-based fuels, such as natural gas, fuel oil or coal, as an energy source for carrying out the melting and the vitrification. This combustion produces CO₂.

As also mentioned above, the emissions of CO₂ by the process also originate from the decarbonation of one or more carbonates present in the starting material.

The replacement of fossil fuels by a non-carbon-based fuel, such as hydrogen, or by combustion-free heating, in particular electric heating, thus makes it possible to reduce the emissions of CO₂ from glass-melting processes, but does not make it possible to eliminate them.

For hollow glass, which contains 11% of CaO in its composition, 86.42 kg of CO₂ are produced by the decomposition of CaCO₃ per tonne of flint hollow glass produced.

For a furnace with an average size of 300 t/d of glass, this makes 26 t/d of CO₂ originating from the batch. For a flat glass furnace which produces approximately 1000 t/d, this CO₂ emission amounts to 65 t/d.

The need to reduce CO₂ emissions from glass-melting furnaces thus remains of current interest.

For fixed industrial sites emitting high flows of CO₂, it is recommended to carry out CCS (Carbon Capture and Sequestration or Carbon Capture and Storage). CCS is a process comprising the stages of capturing the CO₂ present in the emissions, of liquefying the captured CO₂ and of sequestering the liquefied CO₂, for example in cavities which formerly contained natural gas. It is commonly accepted that the sequestration of CO₂ can only be an interim solution before finding permanent solutions. An alternative to CCS is CCU (Carbon Capture and Utilization). CCU differs from CCS in that the liquefied carbon is not sequestered indefinitely but is used in another industrial process, for example in the production of fizzy drinks. For industrial exploitation, CCS and CCU require not only high flows of CO₂-containing gaseous effluents but also that the effluents have a composition such that extraction and purification of the CO₂ present in the effluents are possible without exorbitant costs.

In comparison with electricity-producing power stations, the amount of CO₂ emitted by a glass-melting furnace, with or without fossil fuel combustion, is relatively low. Moreover, the gaseous effluent from a glass-melting furnace contains components, in particular components also resulting from the charge, rendering the capture of CO₂ at the required purity difficult.

Under these circumstances, the capital costs necessary to implement CCS or CCU for a glass-melting furnace are not cost-effective.

The present invention provides a more cost-effective means for reducing CO₂ emissions from a glass-melting furnace.

As illustrated in Figure 1, a charge 11 containing vitrifiable material and/or cullet, and also functional additives, including in particular the stabilizer CaCOs, is introduced into a melting furnace 1.

Inside the furnace 1, the charge 11 is melted and forms a glass bath 15. Above the bath 15 is a gaseous atmosphere 16.

The molten glass present in the bath 15 is refined before being discharged from the furnace 1 in the form of a flow of liquid glass 17 and being directed to a forming installation (not illustrated in the figures) for the manufacture of the final product.

The furnace 1 is heated by combustion of a fuel 12 with an oxidizer 13. The gases 14 generated by the combustion are discharged from the furnace 1 in the form of a gaseous effluent 20.

The fuel 12 can be a combination of a carbon-based fuel and a non-carbon-based fuel. However, in the embodiment illustrated, all of the fuel 12 is green hydrogen, thus reducing the emissions of CO₂ per tonne of glass from the melting furnace by avoiding the generation of CO₂ by combustion.

Despite this measure, CO₂ is indeed present in the gaseous effluent 20 discharged from the furnace 1, more particularly because of the decarbonation, during the melting of the charge 11 and the refining of the molten glass in the glass bath 15, of the carbonate(s) present in the charge 11, in particular calcium carbonate. This decarbonation generates gaseous CO₂, at least a part 18 of which passes into the gaseous atmosphere 16 and is thus discharged from the furnace 1 by the gaseous effluent 20.

In order to reduce even more the emissions of CO₂ to the atmosphere without having to resort to expensive processes, such as CCS or CCU, the gaseous effluent 20 discharged from the furnace 1 is used to produce, by carbonation with the CO₂ present in the gaseous effluent 20, at least one additive in the form of an alkali-metal or alkaline-earth-metal carbonate, at least a part of which is introduced into the furnace 1 with the charge 11.

For this purpose, the CO₂-containing gaseous effluent 20 is introduced into a carbonator 30, in which the gaseous effluent 20 is brought into contact with CaO 31 under conditions, and in particular conditions of temperature and of residence time, such that at least 50%, preferably at least 60% and more preferably at least 70% of the CO₂ present in said effluent 20 reacts with the CaO 31 with formation of CaCO₃.

A single carbonator 30 is shown in Figure 1. The use of several carbonators, operating simultaneously or alternately, is also possible, whereby "operating" refers to the chemical process of carbonation, i.e. the formation of carbonate. In the figure, the sole carbonate formed by carbonation with the CO₂ present in the gaseous effluent 20 is CaCO₃. The CO₂ present in the gaseous effluent 20 can similarly be used for the production of another alkali-metal or alkaline-earth-metal carbonate, which can be used as a functional additive in the glass melting furnace 1, indeed even for the production of a combination of such carbonates.

The CO₂-depleted residue 32 of the gaseous effluent is discharged from the carbonator 30, as is the carbonated product 33.

The conditions, and in particular the conditions of temperature and of residence time, in the carbonator 30 are chosen so that at least 50%, preferably at least 60% and more preferably at least 70% of the CO₂ present in said effluent 20 reacts with the ground CaO 31 with formation of CaCO₃.

The amount of CaO 31 introduced into the carbonator 30 and its surface area of contact with the gaseous effluent 20 are chosen so as to maximize the conversion of CaO into CaCO₃.

In order to increase this contact surface area, porous CaO in the form of particles is advantageously chosen.

Thus, in the embodiment illustrated in Figure 1, porous CaO having a pore volume of greater than 0.078 cm³/Ǻ/g, also called quicklime and commercially available. This porous CaO is ground to a particle size of less than 1 mm, preferably of about 137 µm, so as to obtain a specific surface (BET) greater than 17. This ground CaO 31 is subsequently introduced into the carbonator 30. Inside said carbonator 30.

In the embodiment illustrated in Figure 1, the carbonator 30 is a batch carbonator. The duration of the contact between the gaseous effluent 20 and the ground CaO 31 is greater than 4 minutes. The temperature in the carbonator 30 is between 500°C and 650°C.

At least a part of the carbonated product 33 discharged from the carbonator 30 is incorporated in the charge 11 which is introduced into the furnace 1, if necessary with a supplement 34 of CaCO₃. A large part of the CO₂ of the gaseous effluent 20 is thus trapped and the CaCO₃ obtained will be used as a starting material in the furnace 1.

In so far as the carbonation of the CaO is not complete and it turns out to be necessary to limit the amount of unconverted CaO which is added to the charge 11 and/or that the amount of carbonate formed in the carbonator 30 exceeds the amount to be added to the charge 11, a part 35 of the carbonated product 33 is extracted from the recycle and is not added to the charge 11.

As indicated above, the temperature in the carbonator 30 is chosen so as to promote the reaction of the CO₂ present in the effluent 20 with the CaO, this temperature lying, for example, between 500°C and 650°C. The gaseous effluent 20 is discharged from the furnace 1 at a temperature (typically between 1400°C and 1550°C, indeed even more) which promotes decarbonation rather than carbonation.

The temperature in the carbonator 30 is largely determined by the temperature of the gaseous effluent 20 at the inlet of the carbonator 30.

In order to ensure an appropriate temperature in the carbonator 30, it is proposed to cool the gaseous effluent 20 between its exit from the furnace 1 and its entry into the carbonator 30.

In the embodiment illustrated in Figure 1, to this end, the gaseous effluent 20 passes through a heat exchanger 40 located on the flow path of the gaseous effluent 20 between the furnace 1 and the carbonator 30. The operation of said heat exchanger 40 is regulated so that the gaseous effluent 20 enters the carbonator 30 at an appropriate temperature.

Figure 2 shows an advantageous embodiment in which the thermal energy extracted from the gaseous effluent 20 in the heat exchanger 40 is used to preheat at least a portion of the fuel 12 and/or at least a portion of the oxidizer 13 upstream of the furnace 1.

In order to regulate the portion 12a of the fuel 12 and/or the portion 13a of the oxidizer 13 sent to the heat exchanger, a distribution valve 52 is installed on the flow path of the fuel 12 to the furnace 1 and/or a distribution valve 53 is installed on the flow path of the oxidizer 13 to the furnace 1. The part 12b of the fuel 12 and the part 13b of the oxidizer 13 which is thus not directed towards the heat exchanger 40 is introduced into the furnace 1 without passing through the exchanger 40.

By thus regulating the portion 12a of the fuel 12 and/or the portion 13a of the oxidizer 13 introduced into the exchanger 40, it is possible to regulate the level of cooling of the gaseous effluent 20 in the exchanger 40 while reusing the thermal energy extracted from the gaseous effluent 20 in the glass melting furnace 1.

The distribution between the portions 12a and 12b and/or between the portions 13a and 13b can be regulated automatically, for example as a function of the temperature of the gaseous effluent 20 at the outlet of the exchanger 40 or at the inlet of the carbonator 30.

It is possible to thus preheat both fuel 12a and oxidizer 13a, for example in a single exchanger 40 or in two separate exchangers 40, or to preheat only fuel 12a or only oxidizer 13a.

## Claims

1. Glass-melting process comprising the following stages:
a. introduction of a vitrifiable solid charge (11) into a furnace (1), this charge (11) comprising at least one carbonate,
b. heating and melting of the charge (11) in the furnace (1), so as to obtain molten glass (17), the at least one carbonate undergoing a dissociation reaction and releasing gaseous CO₂ (18),
c. discharge of the molten glass (17) from the furnace (1),
d. discharge of a CO₂-containing gaseous effluent (20) from the furnace (1), and
e. use of the gaseous effluent (20) discharged from the furnace (1) to produce, by carbonation with the CO₂ present in the gaseous effluent (20), at least one additive (33) in the form of an alkali-metal or alkaline-earth-metal carbonate,
at least a part of said additive (33) produced in stage e. being incorporated in the charge (11) which is introduced into the furnace (1) in stage a.,
the process being **characterized in that** the heat for heating the charge (11) in stage b. is provided by:
• by electric heating,
• by combustion of a non-carbon-based fuel (12) with an oxidant (13), optionally in combination with electric heating
• both by combustion of a non-carbon-based fuel (12) with an oxidant (13) and by combustion of a carbon-based fuel with an oxidant, optionally in combination with electric heating.

2. Process according to Claim 1, in which at least a part of the heat for heating the charge (11) in stage b. is provided by combustion of a non-carbon-based fuel (12) selected among hydrogen and ammonia.

3. Process according to Claim 1 or 2, in which at least a part of the heat for heating the charge (11) in stage b. is provided by combustion, the oxidant (13) being chosen from air or oxygen-enriched air.

4. Process according to any one of the preceding claims, in which, for the carbonation in stage e., the gaseous effluent (20) is brought into contact in a carbonator (30) with the oxide (31) and/or the hydroxide of the alkali metal or alkaline-earth metal corresponding to the carbonate to be produced in stage e.

5. Process according to Claim 4, in which the carbonator (30) is a batch carbonator, a fluidized bed carbonator or an entrained bed carbonator.

6. Process according to Claim 4 or 5, in which the carbonation is carried out in the carbonator (30) at a temperature between 500°C and 950°C, preferably between 550°C and 800°C, more preferably between 550°C and 700°C.

7. Process according to one of Claims 4 to 6, in which the gaseous effluent (20) is cooled down to a predetermined temperature or range of temperatures before being introduced into the carbonator (30), said predetermined temperature or said predetermined range of temperatures advantageously being between 600°C and 1000°C, preferably between 650°C and 950°C, more preferably between 700°C and 900°C.

8. Process according to one of Claims 4 to 7, in which the gaseous effluent (20) is cooled in one or more heat exchangers (40) before being introduced into the carbonator (30).

9. Process according to Claim 8, in which, during the cooling of the gaseous effluent (20), thermal energy extracted from the gaseous effluent (20) is used to heat an oxidant (13) and/or a non-carbon-based fuel (12), in which at least a part of the heat for heating the charge (11) in stage b. is provided by combustion and in which oxidant (13) and/or fuel (12) heated during the cooling of the gaseous effluent (20) is/are used to heat the charge (11) in the furnace (1) by combustion with the heated oxidant (13) and/or the heated fuel (12).

10. Process according to any one of the preceding claims, in which the furnace (1) is a batch furnace, a semi-batch furnace or a continuous furnace.

11. Process according to any one of the preceding claims, in which, during stage e., at least one additive (33) chosen from sodium carbonate, calcium carbonate, potassium carbonate, magnesium carbonate, lithium carbonate or barium carbonate is produced.

12. Process according to Claim 11, in which, during stage e., at least one additive (33) chosen from sodium carbonate, calcium carbonate and potassium carbonate is produced.

13. Process according to one of the preceding claims, in which the glass is chosen from soda-lime glasses and borosilicate glasses.
